# EUROPÄISCHE PATENTSCHRIFT

(11) **EP 1 280 320 B1**
(45) Veröffentlichungstag und Bekanntmachung des Hinweises auf die Patenterteilung: **20.04.2005**
(21) Anmeldenummer: 01117704.5
(22) Anmeldetag: 26.07.2001
(51) Int. Cl.: H04M 1/2745, G06F 3/023

(54) **Mobilfunkgerät mit Texteingabehilfe und Wörterbuchfunktion**
Mobile radio telephone comprising text entry and dictionary function
Radiotéléphone mobile avec moyens pour l'entrée de texte et fonction dictionnaire

(43) Veröffentlichungstag der Anmeldung: 29.01.2003
(73) Patentinhaber: SIEMENS AKTIENGESELLSCHAFT, 80333 München (DE)
(72) Erfinder: Schneider, Tobias, Dr., 81825 München (DE)

(56) Entgegenhaltungen:
- EP-A- 1 031 914
- WO-A-01/42875
- WO-A-99/15952
- US-B1- 6 172 625
- US-B1- 6 204 848

## Beschreibung

Die Erfindung betrifft ein Endgerät gemäß dem Oberbegriff des Patentanspruchs.

Ein solches Endgerät der Kommunikationstechnik ist beispielsweise ein Mobilfunkgerät beziehungsweise Handy, wie es vorzugsweise bei zellularen Netzen Verwendung findet. Ein Endgerät der Datenverarbeitungstechnik ist beispielsweise ein Palmtop. Diesen mobilen kleinen Endgeräte weisen im Allgemeinen einen Zwölfertastenblock auf, der zur Eingabe von Ziffern dient. Zur Eingabe von alphabetischen Zeichen sind einzelne Zifferntasten mehrfach belegt. So dient zum Beispiel die Taste für die Ziffer "2" auch zur Eingabe der Buchstaben "A, B, C", die Taste für die Ziffer "3" für die Buchstaben "D, E, F" usw. Die Zifferntasten sind also bei der Eingabe von Buchstaben beziehungsweise Texten mehrdeutig. Zur Behebung dieser Mehrdeutigkeit wird im Allgemeinen die Zifferntaste "2" für die Eingabe des Buchstabens "B" zweimal gedrückt, und beispielsweise die Zifferntaste "3" für die Eingabe des Buchstabens "D" einmal.

Weiter sind sogenannte Eingabehilfen bekannt, beispielsweise T9 von Tegic (Tradename Tegic Communications, Inc.). Solche Texteingabehilfen bauen auf großen sprachspezifischen Wortlisten auf. Bei der Eingabe eines Textes beziehungsweise eines Wortes wird jede der mehrdeutigen Tasten immer nur einmal gedrückt und am Ende des Wortes werden aus der Wortliste ein oder gegebenenfalls mehrere Worte zur Auswahl angezeigt. Die Wortlisten sind sehr umfangreich, beispielsweise mit 50.000 Worten und mehr, und sie sind in mehreren Sprachen auf den Geräten vorhanden.

US 6 172 625 B1 offenbart ein Endgerät, das ein Erkennungsprogramm aufweist, das beispielweise bei Verwendung einer romanischen Sprache eine Eingabe über eine reduzierte Anzahl von Tasten ermöglicht.

Der Erfindung liegt die Aufgabe zugrunde, den Nutzungsumfang für ein solches Endgerät zu erweitern beziehungsweise zu vereinfachen.

Diese Aufgabe wird erfindungsgemäß durch die im Patentanspruch angegebenen Merkmale gelöst.

Das erfindungsgemäße Endgerät weist ohne großen zusätzlichen Aufwand neben der Texteingabehilfe auch eine Wörterbuchfunktion auf.

Im Folgenden wird die Erfindung anhand eines in der Zeichnung dargestellten Ausführungsbeispieles beschrieben.

Die Erfindung geht aus von einem Endgerät der Datenverarbeitungs- und/oder der Kommunikationstechnik. Dieses Endgerät weist eine Texteingabehilfe auf, die auf Wortlisten basiert.

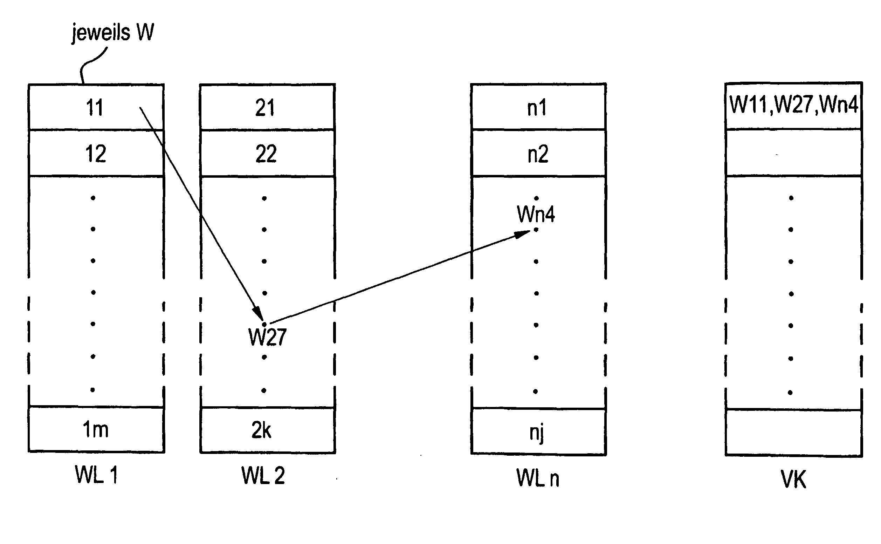

In der Figur 1 sind mehrere solcher Wortlisten WL1, WL2 bis WLn dargestellt. Jede dieser Wortlisten WL1 bis WLn weist Worte aus einer anderen Sprache auf, ist daher sprachspezifisch. Die Wortliste WL1 weist die Worte W11, W12 bis W1n, die Wortliste WL2 die Worte W21, W22 bis W2k, und die Wortliste WLn die Worte Wn1, Wn2 bis Wnj auf. Hierbei ist beispielsweise der Zahlenwert von n ungleich dem Zahlenwert von k. Jedes Wort Wxy, in einer der Wortlisten WL1 bis WLn besitzt einen eigenen Index. Somit ist über diesen Index und die Sprache eine eindeutige Identifikation der Worte Wxy gegeben.

Erfindungsgemäß wird eine weitere Liste angelegt, in welcher eine Verknüpfung der einzelnen Worte Wxy der verschiedenen Sprachen hergestellt wird. Hierdurch lässt sich die Funktionalität eines einfachen Wörterbuches realisieren, und zwar von jeder der vorhandenen n-Sprachen in jede beliebige der anderen n-1-Sprachen.

In dieser weiteren Liste, einer Verkettungsliste VK, wird nun über die Verknüpfung der Worte Wxy beispielsweise die Übersetzung zu dem Wort W11 in der Wortliste WL1 angegeben. Hierzu wird in der ersten Zeile, in der das Wort W11 in der Liste WL1 steht, die zugehörigen Worte Wxy in den anderen Wortlisten WLx angegeben. Dies sind im dargestellten Fall das Wort W27 in der Wortliste WL2 und das Wort Wn4 in der Wortliste WLn.

Der Benutzer gibt beispielsweise in der zur Wortliste WL1 gehörigen Sprache ein Wort (W11) ein, und bekommt in einer auswählbaren anderen Sprache, beispielsweise in der zur Wortliste WLn gehörigen Sprache, das zugehörige Wort Wn4 angezeigt.

In der Verkettungsliste VK sind nun für jeden Wortindex und jede Sprache die korrespondierenden Wortindizes für alle Sprachen eingetragen. Damit ist es für ein einfaches Anwenderprogramm möglich, zu jedem Wort einer Sprache die korrespondierenden Worte der gewünschten Fremdsprache zu identifizieren und auszugeben.

Bei einer Weiterbildung der Erfindung ist es auch möglich, Mehrfacheinträge, beispielsweise für Synonyme, in der Verkettungsliste VK abzulegen. In einer weiteren Variante können noch zusätzliche linguistische Informationen, beispielsweise über Geschlecht der Worte, Konjugationsart oder Aussprache, in die Verkettungsliste VK aufgenommen werden und so ein nahezu vollständiges Wörterbuch erstellt werden.

## Patentansprüche

1. Endgerät der Datenverarbeitungs- und/oder der Kommunikationstechnik mit mehrdeutigen Eingabetasten, mit mindestens zwei sprachspezifischen Wortlisten (WL1, WL2 .. WLn), und mit Mitteln zur Zuordnung von Worten zu den über die Eingabetasten eingegebenen Zeichen,
**gekennzeichnet durch**
eine Verknüpfungsliste (VK), in der einender entsprechende Worte (W11, W27, Wn4) in den sprachspezifischen Wortlisten (WL1, WL2 .. WLn) aufgelistet sind, wodurch eine Wörterbuchfunktion realisiert ist.

## Claims

1. Terminal for data processing and/or communications technology with multiply assigned input keys, having at least two language-specific word lists (WL1, WL2 .. WLn) and having means for assigning words to the characters which are input via the input keys, **characterized by** an interlinking list (VK), in which corresponding words (W11, W27, Wn4) in the language-specific word lists (WL1, WL2 .. WLn) are listed, as a result of which a dictionary function is implemented.

## Revendications

1. Terminal de technique de traitement de données et/ou de télécommunication comprenant des touches d'entrée polyvalentes, avec au moins deux listes de mots spécifiques à la langue (WL1, WL2 .. WLn) et des moyens pour l'attribution de mots aux caractères entrés par les touches d'entrée, **caractérisé par** une liste d'enchaînement (VK), dans laquelle sont listés des mots qui se correspondent (W11, W27, Wn4) dans les listes de mots spécifiques à la langue (WL1, WL2 .. WLn), une fonction de dictionnaire étant ainsi réalisée.
